# EUROPÄISCHE PATENTANMELDUNG

(11) **EP 2 378 210 A1**
(43) Veröffentlichungstag der Anmeldung: **19.10.2011**
(21) Anmeldenummer: 10193537.7
(22) Anmeldetag: 02.12.2010
(51) Int. Cl.: F24D 3/08, F24H 1/06

(54) **Temperiersystem**

(30) Priorität: 19.04.2010 WO PCT/EP2010/055136
(71) Anmelder: Solar-Master Switzerland GmbH, 2576 Lüscherz (CH)
(72) Erfinder: Strauss, Dietmar, 4625 Oberbuchsiten (CH)
(74) Vertreter: Hiller, Volker

(57) **Zusammenfassung**

Vorgeschlagen wird ein Temperiersystem
- für die Versorgung von mobilen Wohnstätten und/oder von Baugewerken mit Wärme und/oder mit Warmwasser,
- für die Luftentfeuchtung in mobilen Wohnstätten und/oder in Baugewerken, mindestens umfassend:
■ ein primäres Mittel (1) zur Temperierung eines zweiten Mediums,
■ einen Pufferspeicher (3) zur Bevorratung eines ersten Mediums mit einer Wärmetauscherkonstruktion, geeignet zur stofflichen Trennung und zum thermischen Austausch von zweitem und erstem Medium,
■ Durchleitungsverbindungen (6) für das zweite Medium zwischen primärem Mittel (1) zur Temperierung des zweiten Mediums und der Wärmetauscherkonstruktion des Pufferspeichers (3),
dadurch gekennzeichnet, dass
- das Temperiersystem weiterhin umfasst:
■ einen zweiten Pufferspeicher (5) zur Vorhaltung eines dritten Mediums mit einer Wärmetauscherkonstruktion, geeignet zur stofflichen Trennung und zum thermischen Austausch von zweitem und drittem Medium,
■ Durchleitungsverbindungen (7) für das zweite Medium zwischen der Wärmetauscherkonstruktion des Pufferspeichers (3) zur Bevorratung des ersten Mediums und der Wärmetauscherkonstruktion des zweiten Pufferspeichers (5) zur Vorhaltung des dritten Mediums,
Anschlussverbindungen (8.1) für die Kreislaufversorgung von mindestens einem Mittel (2) zur Temperierung von Umgebungsluft mit dem dritten Medium aus dem zweiten Pufferspeicher (5),

- das Temperiersystem als transportables Temperiersystem ausgebildet ist.

## Beschreibung

Die vorliegende Erfindung betrifft ein Temperiersystem, das ganz besonders geeignet ist für die Versorgung von mobilen Wohnstätten und/oder von Baugewerken mit Wärme und/oder Warmwasser und das mindestens ein primäres Mittel (1) zur Temperierung eines zweiten Mediums, einen Pufferspeicher (3) zur Bevorratung gewöhnlich von Brauchwasser als erstes Medium und Durchleitungsverbindungen (6) für ein zweites Medium, geeignet zur Übertragung der Wärme des primären Mittels zur Wärmeerzeugung (1) an das Brauchwasser im Pufferspeicher (3), umfasst. Das hier vorgeschlagene Temperiersystem weist als ein kennzeichnendes Merkmal einen technischen Aufbau auf, der das Temperiersystem leicht transportabel und an beliebiger Stelle einsetzbar macht.

Bei bekannten Temperiersystemen in Form einfacher ortsfester Heizungssysteme weisen die Rohrverbindungen für das zweite Medium in der Regel eine doppelte Funktion auf:
- Zum einen dienen sie der Übertragung der Wärme des primären Mittels zur Temperierung des zweiten Mediums, hier besser: des Wärmeerzeugers, an das Brauchwasser im Pufferspeicher, weswegen die Durchleitungsverbindungen auch in das Innere des Pufferspeichers hineinragen und dort zur Ausbildung eines Wärmetauschers mäander- oder schraubenförmig verlaufen.
- Zum anderen versorgen sie gleichzeitig mindestens ein Mittel zur Erwärmung von Umgebungsluft, hier in Form eines Heizkörpers, mit der Wärme des Wärmeerzeugers.

Die doppelte Nutzung der Durchleitungsverbindungen für das zweite Medium weist viele Nachteile auf. Gemäß eines ersten Nachteils sind die Möglichkeiten für die Auswahl des primären Mittels zur Temperierung des zweiten Mediums stark eingeschränkt. Da die Durchleitungsverbindungen auch den mindestens einen Heizkörper mit der Wärme des primären Mittels zur Temperierung des zweiten Mediums versorgen, darf das zweite Medium im Inneren der Durchleitungsverbindungen kein Frigen und/oder Glykol enthalten. Auch lässt das bekannte System keine Auswahl zwischen alleiniger Brauchwassererwärmung oder alleiniger Nutzung des mindestens einen Heizkörpers zu.

Das derart bekannte ortsfeste Heizungssystem weist ferner den großen Nachteil einer unflexiblen Nach- und Umrüstung auf. Es ist bei dem bekannten System aufgrund der eingeschränkten Nutzungsmöglichkeit für die Durchleitungsverbindungen nicht möglich, andere oder weitere primäre Mittel zur Temperierung des zweiten Mediums in das System zu integrieren, da insbesondere moderne Mittel zur Temperierung des zweiten Mediums, wie Luftwärmepumpe, Erdwärmepumpe und Solarpanel Glykol-haltige Medien zur Wärmeübertragung benötigen. Außerdem weisen die verschiedenen Mittel zur Temperierung des zweiten Mediums sehr unterschiedliche Arbeitstemperaturen für das Medium zur Wärmeübertragung auf, was völlig andere Konstruktionen für den Wärmetauscher im Inneren des Pufferspeichers zur Bevorratung von warmem Brauchwasser erfordert.

Ein weiterer entscheidender Nachteil der bekannten ortsfesten Heizungssysteme ist ihre Unflexibilität gegenüber Verbrauchsspitzen bei der Entnahme von warmen Brauchwasser genauso wie bei Bedarf von besonders viel Heizungswärme über den mindestens einen Heizkörper. Hier ist es nötig, von der maximal vorausgeahnten Bedarfsmenge auszugehen. Nachteil dieser Methode ist zum einen, dass die Pufferspeicher exorbitant groß gewählt werden müssen mit dem in Kauf zu nehmenden Nachteil, dann stets auch eine sehr große Menge an Wasser vorrätig und damit geheizt halten zu müssen. Die Bevorratung von geheiztem Wasser ist jedoch teuer und macht das System träge. Zum anderen weist die bekannte Methode den Nachteil auf, dass selbst bei großzügiger Wahl der Pufferspeicher saisonale oder generelle Änderungen im Bedarf nicht kompensiert werden können.

Es bleibt des Weiteren festzustellen, dass praktisch alle bekanten Heizungssysteme eine ortsfeste Aufstellung erfordern, womit die Versorgung von mobilen Wohnstätten und/oder von Baugewerken mit Wärme und/oder Warmwasser zumindest schwierig, wenn nicht unmöglich wird.

Der Erfindung lag zunächst die Erkenntnis zu Grunde, dass es eine Versorgung von mobilen Wohnstätten, wie es beispielsweise von Hilfsorganisationen nach Umweltkatastrophen aufgestellte Zeltlager bzw. Zeltstädte darstellen, und/oder von Baugewerken, wie es Rohbauten im Zuge der Errichtung von Häusern darstellen, mit Wärme und/oder Warmwasser derzeit selten oder nur in unzureichender Qualität gibt. Es ergab sich infolgedessen die Aufgabe, der Öffentlichkeit ein neues Temperiersystem zur Verfügung zu stellen, das
□ geeignet ist für die Versorgung von mobilen Wohnstätten und/oder von Baugewerken mit Wärme und/oder Warmwasser,
□ flexibel in seiner örtlichen Umsetzung und schnell in seiner Inbetriebnahme nach Aufstellung ist,
□ flexibel gegenüber benötigter Bedarfsmengen insbesondere von Brauchwasser ist, was so auch die Flexibilität des Temperiersystems gegenüber benötigter Betriebsmittel, die zum Betrieb des Temperiersystems notwendig sind, weiter einschränkt.

Die Erfinder erkannten ferner, dass es eine besonders bevorzugte Erweiterung innerhalb der Aufgabenstellung darstellen würde, wenn das der Öffentlichkeit zur Verfügung zu stellende Temperiersystem auch zu Entfeuchtung von Umgebungsluft beitragen könnte und insbesondere, wenn es mit Blick auf die Flexibilität seiner örtlichen Umsetzung zum Betrieb möglichst wenig externe Versorgungsanschlüsse bedarf.

Die Aufgabe wird gelöst mit einem Temperiersystem, mindestens umfassend
■ ein primäres Mittel (1) zur Temperierung eines zweiten Mediums,
■ einen Pufferspeicher (3) zur Bevorratung eines ersten Mediums mit einer Wärmetauscherkonstruktion, geeignet zur stofflichen Trennung und zum thermischen Austausch von zweitem und erstem Medium,
■ Durchleitungsverbindungen (6) für das zweite Medium zwischen primärem Mittel (1) zur Temperierung des zweiten Mediums und der Wärmetauscherkonstruktion des Pufferspeichers (3),
   dadurch gekennzeichnet, dass
   - das Temperiersystem weiterhin umfasst:
      □ einen zweiten Pufferspeicher (5) zur Vorhaltung eines dritten Mediums mit einer Wärmetauscherkonstruktion, geeignet zur stofflichen Trennung und zum thermischen Austausch von zweitem und drittem Medium,
      □ Durchleitungsverbindungen (7) für das zweite Medium zwischen der Wärmetauscherkonstruktion des Pufferspeichers (3) zur Bevorratung des ersten Mediums und der Wärmetauscherkonstruktion des zweiten Pufferspeichers (5) zur Vorhaltung des dritten Mediums,
      □ Anschlussverbindungen (8.1) für die Kreislaufversorgung von mindestens einem Mittel (2) zur Temperierung von Umgebungsluft mit dem dritten Medium aus dem zweiten Pufferspeicher (5),
   - das Temperiersystem als transportables Temperiersystem ausgebildet ist.

Das erfindungsgemäße transportable Temperiersystem umfasst zunächst ein primäres Mittel (1) zur Temperierung eines zweiten Mediums, wobei dieses Mittel (1) in der Lage ist, über ein Hilfsmedium - erfindungsgemäß ist dieses Hilfsmedium als das zweite Medium in der vorliegenden Schrift eingeführt - das erste und das dritte Medium über Wärmetauscherkonstruktionen bei dem Pufferspeicher (3) für das erste Medium und bei dem zweiten Pufferspeicher (5) für das dritte Medium zu temperieren, das bedeutet im Rahmen der hier vorliegenden Schrift: zu erwärmen bzw. zu kühlen. Gleichzeitig ist gewährleistet durch die Wärmetauscherkonstruktionen bei dem Pufferspeicher (3) für das erste Medium und bei dem zweiten Pufferspeicher (5) für das dritte Medium, dass das zweite Medium während des jeweiligen Temperierens von erstem und drittem Medium stofflich getrennt bleibt einerseits vom ersten Medium und andererseits vom dritten Medium.

Als primäres Mittel (1) zur Temperierung des zweiten Mediums kommen bevorzugt solche Elemente in Betracht, die ausgesucht sind aus der Liste, umfassend: Solarpanel und, ganz besonders bevorzugt, Luftwärmepumpe. Sofern das erfindungsgemäße transportable Temperiersystem für eine längere Zeit am gleichen Einsatzort verbleiben soll, gilt auch die mögliche Einbindung von mindestens einem externen primären Mittel (1-ex) zur Temperierung des zweiten Mediums als bevorzugt, ausgesucht aus der Liste, mindestens umfassend Ölbrenner, Gasbrenner, Erdwärmepumpe, Solarpanel, ohne auf diese genannten externen primären Mittel (1-ex) zur Temperierung des zweiten Mediums im Sinne der vorliegenden Erfindung beschränkt zu sein. Besonders vorteilhaft an der vorliegenden Erfindung ist die Tatsache, dass auch beliebige Kombinationen unter anderem der zuvor genannten externen primären Mittel (1-ex) zur Temperierung des zweiten Mediums genutzt werden können. Diese werden dann über bevorzugt vorzusehende Anschlüsse an den Durchleitungsverbindungen (6) entweder alternativ oder zusätzlich zu den primären Mitteln (1) zur Temperierung des zweiten Mediums eingesetzt.

Durch die Möglichkeit, alternativ oder zusätzlich zu den systemeigenen primären Mitteln (1) zur Temperierung des zweiten Mediums auch eine breite Auswahl an externen primären Mitteln (1-ex) zur Temperierung des zweiten Mediums einsetzen zu können, ist es insbesondere möglich, bei einem in ein entsprechend der vorliegenden Erfindung aufgebautes transportables Temperiersystem bereits eingebundenen primären Mittel (1) dieses gegen ein anderes primäres Mittel (1) zur Temperierung des zweiten Mediums beispielsweise zwecks Wartung und/oder Bedarfs- bzw. Leistungsanpassung auszutauschen.

Als erstes Medium gilt Brauch- bzw. Trinkwasser als bevorzugt, das insbesondere zur freien Entnahme vorgehalten ist. Zur Bevorratung dieses Trinkwassers dient der Pufferspeicher (3), der bevorzugt modular aufgebaut ist, was bedeutet, dass er nicht aus einem einzigen großen, sondern aus mehreren kleinen bevorzugt in Reihe geschalteten Behältern (3-1, 3-2, 3-3) besteht bzw. diese mehreren kleinen in Reihe geschalteten Behälter (3-1, 3-2, 3-3) umfasst. Ein entscheidender Vorteil dieser modularen Bauweise für den Pufferspeicher (3) ist es, dass die in beliebiger Anzahl bevorzugt in Reihe zu schaltenden Einzelbehälter (3-1, 3-2, 3-3) preiswert herstellbar und besonders leicht zu transportieren und zu montieren sind. Auch ist es nach Aufbau des erfindungsgemäßen transportablen Temperiersystems jederzeit möglich, über bevorzugt vorgesehene Anschlüsse zusätzliche, externe Behälter (3-ex) modular zu den systemeigenen Behältern des Pufferspeicher (3) bevorzugt in Reihe hinzuzufügen.

Das vom primären Mittel (1) temperierte zweite Medium wird über Durchleitungsverbindungen (6), das sind bevorzugt Rohrleitungen, dann der Wärmetauscherkonstruktion eines ersten Behälters (3-1) des Pufferspeichers (3) für das erste Medium zugeführt. Diese Wärmetauscherkonstruktion kann so ausgebildet sein, dass eine außenseitige Rohrschlange um den ersten Behälter (3-1) ausgebildet ist zur Durchleitung des zweiten Mediums. Bevorzugt im Sinne der vorliegenden Erfindung ist es jedoch, wenn dieser erste Behälter (3-1) doppelwandig aufgebaut ist mit einem zentralen Innenraum, der von einem äußeren Hohlzylinder formschlüssig umgeben ist: der äußere Hohlzylinder ist zur Durchführung des zweiten Mediums vorgesehen, der zentrale Innenraum ist für die Bevorratung des ersten Mediums vorgesehen. Er kann bevorzugt Leitbleche aufweisen, um das erste Medium während seiner Temperierung durch das zweite Medium in Rotation zu versetzen, was die Effektivität des Pufferspeichers (3) für das erste Medium vergrößert.

Das zweite Medium wird nach Verlassen der Wärmetauscherkonstruktion des ersten Behälters (3-1) des Pufferspeichers (3) für das erste Medium dann optional den Wärmetauscherkonstruktionen von weiteren Behältern (3-2, 3-3) des Pufferspeichers (3) für das erste Medium zugeführt, wobei alle bevorzugt in Reihe geschalteten Behälter (3-1, 3-2, 3-3) zur Ausbildung des Pufferspeichers (3) für das erste Medium bevorzugt gleich aufgebaut sind, was insbesondere in bevorzugter Ausführung bedeutet, dass alle bevorzugt in Reihe geschalteten Behälter (3-1, 3-2, 3-3) zur Ausbildung des Pufferspeichers (3) den gleichen doppelwandige Aufbau aufweisen. Um auf Bedarfsspitzen hinsichtlich des ersten Mediums flexibel reagieren zu können, gilt es als besonders bevorzugt, wenn es Bypass-Durchleitungsverbindungen für das zweite Medium und geeignet angeordnete Ventile gibt, die es ermöglichen, dass bedarfsorientiert einzelne oder auch alle Behälter aus den bevorzugt in Reihe geschalteten Behältern (3-1, 3-2, 3-3) zur Ausbildung des Pufferspeichers (3) für das erste Medium hinzu- oder weggeschaltet werden.

Es ist insofern möglich und gilt als weiterer ganz wesentlicher Vorteil der vorliegenden Erfindung, dass durch die Möglichkeit, den Pufferspeicher (3) für das erste Medium modular und mit optionalen Bypass-Durchleitungsverbindungen für das zweite Medium auszubilden, jederzeit zusätzliche einzelne systemeigene und/oder externe Behälter zur Ausbildung des Pufferspeichers (3, 3-ex) ohne arbeitstechnischem und/oder monetärem Aufwand einzubinden oder aber zuvor eingebundene einzelne Behälter zur Ausbildung des Pufferspeichers (3, 3-ex) auszubauen oder bei kurzfristig geringerem Bedarf zu überbrücken.

Mindestens ein Behälter aus den in Reihe geschalteten Behältern (3-1, 3-2, 3-3) zur Ausbildung des Pufferspeichers (3) weist bevorzugt eine Entnahmestelle (4) für das erste Medium auf. Aus Flexibilitätsgründen kann es jedoch sinnvoll sein, dass jeder dieser in Reihe geschalteten Behältern (3-1, 3-2, 3-3) zur Ausbildung des Pufferspeichers (3) eine solche Entnahmestelle (4) aufweist.

Als zweites Medium gilt Wasser als bevorzugt, das je nach zum Einsatz kommendem primärem Mittel (1) zur Temperierung des zweiten Mediums glykol- oder frigenhaltig sein kann.

Als drittes Medium gilt Wasser als bevorzugt, das gegebenenfalls noch Zusätze zur Rostvermeidung und/oder weitere Hilfsstoffe aufweisen kann. Zur Vorhaltung dieses Wassers dient der zweite Pufferspeicher (5), der bevorzugt modular aufgebaut ist, was bedeutet, das er nicht aus einem einzigen großen, sondern aus mehreren kleinen bevorzugt in Reihe geschalteten Behältern (5-1, 5-2, 5-3) besteht. Erneut ist es ein entscheidender Vorteil dieser modularen Bauweise diesmal für den zweiten Pufferspeicher (5), dass die in beliebiger Anzahl bevorzugt in Reihe zu schaltenden Einzelbehälter preiswert herstellbar und besonders leicht zu transportieren und zu montieren sind. Auch ist es nach Aufbau des erfindungsgemäßen transportablen Temperiersystems jederzeit möglich, über bevorzugt vorgesehene Anschlüsse zusätzliche, externe Behälter (5-ex) modular zu den systemeigenen Behältern des zweiten Pufferspeichers (5) bevorzugt in Reihe hinzuzufügen.

Das vom primären Mittel (1) temperierte zweite Medium wird, nach dem es bereits einen Teil seiner Wärme bzw. seiner Kälte über die Wärmetauscherkonstruktionen des Pufferspeichers (3) an das erste Medium abgegeben hat, über Durchleitungsverbindungen (7), das sind jeweils bevorzugt Rohrleitungen, dann der Wärmetauscherkonstruktion eines ersten Behälters (5-1) des zweiten Pufferspeichers (5) für das dritte Medium zugeführt. Diese Wärmetauscherkonstruktion kann so ausgebildet sein, dass eine außenseitige Rohrschlange um den ersten Behälter (5-1) ausgebildet ist zur Durchleitung des zweiten Mediums. Bevorzugt im Sinne der vorliegenden Erfindung ist es jedoch, wenn dieser erste Behälter (5-1) doppelwandig aufgebaut ist mit einem zentralen Innenraum, der von einem äußeren Hohlzylinder formschlüssig umgeben ist: der äußere Hohlzylinder ist zur Durchführung des zweiten Mediums vorgesehen, der zentrale Innenraum ist für die Vorhaltung des dritten Mediums vorgesehen. Er kann bevorzugt Leitbleche aufweisen, um das dritte Medium während seiner Temperierung durch das zweite Medium in Rotation zu versetzen, was die Effektivität des zweiten Pufferspeichers (5) für das dritte Medium vergrößert.

Das zweite Medium wird nach Verlassen der Wärmetauscherkonstruktion des ersten Behälters (5-1) vom zweiten Pufferspeicher (5) für das dritte Medium dann optional den Wärmetauscherkonstruktionen von weiteren Behältern (5-2, 5-3) des zweiten Pufferspeichers (5) für das dritte Medium zugeführt, wobei alle bevorzugt in Reihe geschalteten Behälter (5-1, 5-2, 5-3) zur Ausbildung des zweiten Pufferspeichers (5) für das dritte Medium bevorzugt gleich aufgebaut sind, was insbesondere in bevorzugter Ausführung bedeutet, dass alle bevorzugt in Reihe geschalteten Behälter (5-1, 5-2, 5-3) zur Ausbildung des zweiten Pufferspeichers (5) den gleichen doppelwandige Aufbau aufweisen. Um auf Bedarfsspitzen hinsichtlich des dritten Mediums flexibel reagieren zu können, gilt es als besonders bevorzugt, wenn es Bypass-Durchleitungsverbindungen für das zweite Medium und geeignet angeordnete Ventile gibt, die es ermöglichen, dass bedarfsorientiert einzelne oder auch alle Behälter aus den bevorzugt in Reihe geschalteten Behältern (5-1, 5-2, 5-3) zur Ausbildung des zweiten Pufferspeichers (5) für das dritte Medium hinzu- oder weggeschaltet werden.

Es ist insofern möglich und gilt als weiterer ganz wesentlicher Vorteil der vorliegenden Erfindung, dass durch die Möglichkeit, den zweiten Pufferspeicher (5) für das dritte Medium modular und mit optionalen Bypass-Durchleitungsverbindungen für das zweite Medium auszubilden, jederzeit zusätzliche einzelne systemeigene und/oder externe Behälter zur Ausbildung des zweiten Pufferspeichers (5, 5-ex) ohne arbeitstechnischem und/oder monetärem Aufwand einzubinden oder aber zuvor eingebundene einzelne Behälter zur Ausbildung des zweiten Pufferspeichers (5, 5-ex) auszubauen oder bei kurzfristig geringerem Bedarf zu überbrücken.

Das in dem Behälter (5-1) oder optional in den Behältern (5-1, 5-2, 5-3, 5-ex) des zweiten Pufferspeichers (5) vorgehaltene dritte Medium wird über Anschlussverbindungen (8.1) und über bevorzugt daran angeschlossene externe Durchleitungsverbindungen (8.2), das sind Schläuche oder bevorzugt Rohrleitungen, mindestens einem Mittel (2) zur Temperierung von Umgebungsluft zugeführt, von wo es dem Behälter (5-1) oder optional den Behältern (5-1, 5-2, 5-3, 5-ex) des zweiten Pufferspeichers (5) zur Temperierung wieder zurück zugeführt wird. Dabei ist das mindestens eine Mittel (2) zur Temperierung von Umgebungsluft bevorzugt ein Heizkörper. Das bedeutet, das hier vorgeschlagene transportable Temperiersystem für die Versorgung von mobilen Wohnstätten und/oder von Baugewerken mit Wärme und/oder Warmwasser kann über das im Kreislauf geführte dritte Medium externe Heizkörper mit Wärme bzw. mit Kälte versorgen.

Das hier vorgeschlagene Temperiersystem weist ganz besonders bevorzugt Bypass-Durchleitungsverbindungen (9) für das zweite Medium auf, wobei diese Bypass-Durchleitungsverbindungen (9), welche auch bevorzugt als Rohrleitungen ausgebildet sind, zur Übertragung der erzeugten Wärme bzw. der erzeugten Kälte des primären Mittels (1) zur Temperierung des zweiten Mediums und/oder des externen primären Mittels (1-ex) zur Temperierung des zweiten Mediums ausschließlich an das dritte Medium im zweiten Pufferspeicher (5) dienen. Mit Hilfe solcher Bypass-Durchleitungsverbindungen (9) ist es also möglich, ausschließlich das dritte Medium im zweiten Pufferspeicher (5) mit dem zweiten Medium - zuvor temperiert mittels des primären Mittels (1) und/oder des externen primären Mittels (1-ex) - zu temperieren, während das erste Medium in den optional mehreren und in Reihe geschalteten Behältern (3-1, 3-2, 3-3) zur Ausbildung des Pufferspeichers (3) nicht temperiert wird.

Es ist dabei von bevorzugter Ausführung, wenn das mindestens eine Mittel (2) zur Temperierung von Umgebungsluft, beispielsweise in der Ausführung eines Heizkörpers, derart ausgestaltet ist, dass es als Luftentfeuchter geeignet ist. Zu diesem Zweck wird das mindestens eine Mittel (2) zur Temperierung von Umgebungsluft von einem gekühlten zweiten Medium durchströmt, in dessen Folge es zur Kondensation der Umgebungsluft an den Wandungen des mindestens einen Mittels (2) zur Temperierung von Umgebungsluft kommt. Dieses mindestens eine Mittel (2) zur Temperierung von Umgebungsluft weist dann Mittel zum Sammeln und Abführen des Kondensats auf, wodurch die Umgebungsluft nachhaltig entfeuchtet wird.

In einer besonders bevorzugten Anwendung des erfindungsgemäßen Temperiersystems wird dieses alternierend im Heiz- und Kühlmodus betrieben:
- im Heizmodus kann die Umgebungsluft durch das mindestens eine Mittel (2) zur Temperierung von Umgebungsluft erwärmt werden, gleichzeitig besteht die Möglichkeit, auch das erste Medium zu erwärmen,
- im Kühlmodus wird die Umgebungsluft durch das mindestens eine Mittel (2) zur Temperierung von Umgebungsluft entfeuchtet, hier wird bevorzugt das erste Medium nicht temperiert, was durch die optional vorgesehenen Bypass-Durchleitungsverbindungen (9) jederzeit und auch dynamisch erfolgen kann.
In der oben offenbarten Ausführungsform kommen als primäre Mittel (1) zur Temperierung des zweiten Mediums und/oder als externe primäre Mittel (1-ex) zur Temperierung des zweiten Mediums insbesondere Luftwärmepumpe oder auch Erdwärmepumpe in Betracht, weil sie nicht nur zur Heizung, sondern auch zur Kühlung bestens geeignet sind.

Genauso gilt eine Ausführung als bevorzugt, bei der das vorgeschlagene Temperiersystem Bypass-Durchleitungsverbindungen für das zweite Medium aufweist, wobei diese Bypass-Durchleitungsverbindungen zur Übertragung der erzeugten Wärme bzw. der erzeugten Kälte des primären Mittels (1) zur Temperierung des zweiten Mediums und/oder des externen primären Mittels (1-ex) zur Temperierung des zweiten Mediums ausschließlich an das erste Medium in den optional mehreren und in Reihe geschalteten Behältern (3-1, 3-2, 3-3, 3-ex) zur Ausbildung des Pufferspeichers (3) dienen. Mit Hilfe solcher Bypass-Durchleitungsverbindungen ist es dann möglich, ausschließlich das erste Medium im Pufferspeicher (3) mit der erzeugten Wärme bzw. der erzeugten Kälte des primären Mittels (1) zur Temperierung des zweiten Mediums und/oder des externen primären Mittels (1-ex) zur Temperierung des zweiten Mediums zu versorgen, während das dritte Medium in den optional mehreren und in Reihe geschalteten Behältern (5-1, 5-2, 5-3, 5-ex) zur Ausbildung des zweiten Pufferspeichers (5) nicht temperiert wird.

Das hier vorgeschlagene transportable Temperiersystem ist ausgebildet zum Aufbau auf mobilen Plattformen, ausgesucht aus der Liste, mindestens umfassend
- Anhängerfahrgestell mit festem Kofferaufbau,
- Pritschenaufbau für Lastkraftwagen,
- Wechselcontainer.

Zum Betrieb des hier vorgeschlagene transportable Temperiersystem ist dieses als geschlossenes System ausschließlich anzuschließen
- an eine externe Stromversorgung, wofür bevorzugt 220 V bzw. 380 V, jeweils bevorzugt Wechselspannung, gilt. Eine solche Spannung ist bei einem Einsatz auf Baustellen immer verfügbar. Es ist genauso möglich, das erfindungsgemäße transportable Temperiersystem mit einem externen Notstromaggregat spannungsmäßig zu versorgen, was sich insbesondere bei einem Einsatz des erfindungsgemäßen transportablen Temperiersystems in Katastrophengebieten anbietet.
- an die Mittel (2) zur Temperierung von Umgebungsluft, optional. Hier sind über Durchleitungsverbindungen (8.2) für das dritte Medium auch mehrere Mittel (2) zur Temperierung von Umgebungsluft, bevorzugt in Reihe geschaltet, anschließbar.

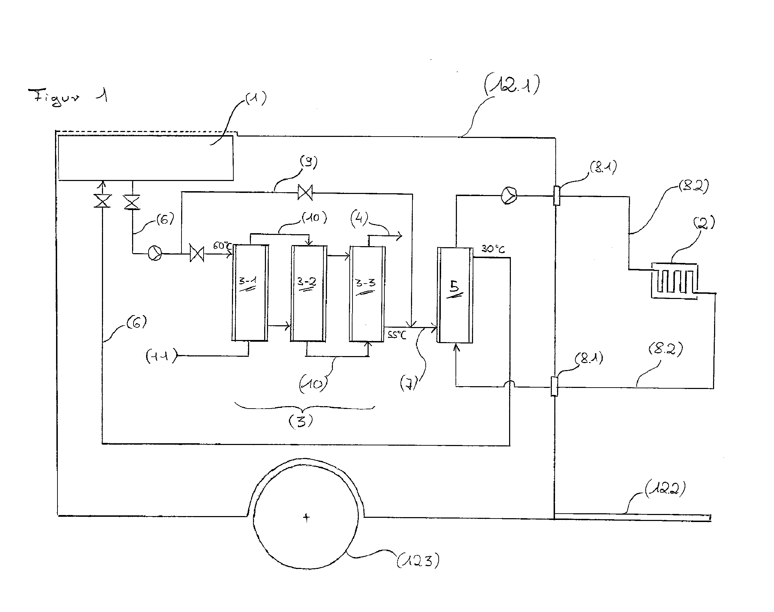

Die hier vorgeschlagene Erfindung soll anhand der nachfolgenden Figur 1 weiter erläutert werden:

Dargestellt ist ein erfindungsgemäßes transportables Temperiersystem, gebaut auf ein Anhängerfahrgestell mit festem Kofferaufbau (12.1). Bei dem gezeichneten Fahrzeuganhänger sind dessen Deichsel (12.2) und eines seiner beiden Räder (12.3) mit dargestellt. Nahe einer Außenwand des festem Kofferaufbau (12.1), die an dieser Stelle Lüftungsgitter bzw. Lüftungsrippen aufweist, ist eine Luftwärmepumpe als primäres Mittel (1) zur Temperierung eines zweiten Mediums vorgesehen. Die Luftwärmepumpe ist über eine Rohrzuleitung als Durchleitungsverbindung (6) für das als zweites Medium eingesetzte Glykol-haltige Wasser mit dem äußeren Hohlzylinder des ersten von drei in Reihe geschalteten Behältern (3-1, 3-2, 3-3) verbunden, wobei diese drei Behälter (3-1, 3-2, 3-3) zusammen den Pufferspeicher (3) für das erste Medium, das ist hier Trinkwasser, bilden. Alle drei in Reihe geschalteten Behälter (3-1, 3-2, 3-3) des Pufferspeichers (3) für das erste Medium sind dabei gleich in der Art aufgebaut, dass sie doppelwandig ausgestaltet sind mit einem zentralen Innenraum, der jeweils von einem äußeren Hohlzylinder formschlüssig umgeben ist, wobei der äußere Hohlzylinder zur Durchführung des zweiten Mediums vorgesehen ist, während der zentrale Innenraum jeweils für die Bevorratung des Trinkwassers vorgesehen ist. In die Rohrzuleitung (6) zwischen primärem Mittel (1) zur Temperierung des zweiten Mediums und dem oberen Teil des äußeren Hohlzylinders des ersten Behälters (3-1) vom Pufferspeicher (3) für das Trinkwasser ist zunächst direkt am Ausgang des primärem Mittels (1) zur Temperierung des zweiten Mediums und zusätzlich am Eingang zum äußeren Hohlzylinders des ersten Behälters (3-1) vom Pufferspeicher (3) jeweils ein Absperrventil und zwischen diesen beiden Absperrventilen eine Umwälzpumpe eingebaut. Die äußeren Hohlzylinder der drei in Reihe geschalteten Behälter (3-1, 3-2, 3-3) vom Pufferspeicher (3) für das Trinkwasser sind alternierend erst unten, dann oben - und bei weiteren Behältern entsprechend folgend - über Rohrverbindungen für das zweite Medium miteinander verbunden. Vom letzten äußeren Hohlzylinder des Behälters (3-3) vom Pufferspeicher (3) für das Trinkwasser führt eine Rohrverbindung (7) zum äußeren Hohlzylinder des in diesem Beispielfall einzigen Behälters vom zweiter Pufferspeicher (5) für drittes Medium, das ist Wasser für die Mittel (2) zur Temperierung von Umgebungsluft. Schließlich führt eine Rohrleitung (6) vom äußeren Hohlzylinder des einzigen Behälters vom zweiten Pufferspeicher (5) für das dritte Medium wieder zurück zum primären Mittel (1) zur Temperierung des zweiten Mediums, wobei auch in diese Rohrleitung ein Absperrventil eingebaut ist. In dem Kreislaufsystem für das zweite Medium ist ferner eine Bypass-Rohrleitung (9) eingebaut, welche vor dem Einlauf in den äußeren Hohlzylinder des ersten der drei in Reihe geschalteten Behälter (3-1, 3-2, 3-3) vom Pufferspeicher (3) für das Trinkwasser, zwischen Umwälzpumpe und Absperrventil am Eingang zum äußeren Hohlzylinders des ersten Behälters (3-1) vom Pufferspeicher (3) gelegen, abzweigt und hin zum Auslauf des äußeren Hohlzylinder des letzten der drei in Reihe geschalteten Behälter (3-1, 3-2, 3-3) vom Pufferspeicher (3) für das Trinkwasser führt. Auch in diese Bypass-Rohrleitung (9) ist mindestens ein Absperrventil eingebaut.

Die zentralen Innenräume der drei in Reihe geschalteten Behälter (3-1, 3-2, 3-3) vom Pufferspeicher (3) für das Trinkwasser sind alternierend erst oben, dann unten - und bei weiteren Behältern entsprechend folgend - über Rohrverbindungen (10) für das Trinkwasser miteinander verbunden. Zusätzlich weist der erste Behälter (3-1) vom Pufferspeicher (3) einen Zulauf für das Trinkwasser (11), zumindest der letzte Behälter (3-3) vom Pufferspeicher (3) eine Entnahmestelle (4) für das Trinkwasser auf.

Der zentrale Innenraum des einzigen Behälters vom zweiten Pufferspeicher (5) für das dritte Medium ist über die den festem Kofferaufbau (12.1) durchstoßende Anschlussverbindungen (8.1) und mittels Durchleitungsverbindungen (8.2) mit einem Heizkörper als Mittel (2) zur Temperierung von Umgebungsluft verbunden, wobei zwischen dem zweiten Pufferspeicher (5) und dem Mittel (2) zur Temperierung von Umgebungsluft noch innerhalb des Kofferaufbau (12.1) eine Umwälzpumpe vorgesehen ist. Im hier gezeichneten Fall soll ferner der Heizkörper Mittel zum Sammeln und Abführen von Kondensat aufweisen, so dass das dargestellte Temperiersystem auch zum Entfeuchten von Umgebungsluft genutzt werden kann.

In der Figur 1 sind ferner Hinweise auf erwartungsgemäße Temperaturen des zweiten Mediums in den Rohrleitungen zu finden. Während diese Temperatur am Eingang zum ersten Behälter (3-1) vom Pufferspeicher (3) für das Trinkwasser bei ca. 60°C liegen kann, ist am Ausgang vom letzten Behälter (3-3) vom Pufferspeicher (3) für das Trinkwasser diese Temperatur schon auf ca. 55°C gefallen. Am Ausgang des einzigen Behälters vom zweiten Pufferspeicher (5) für das dritte Medium kann diese Temperatur dann nur noch erwartungsgemäß bei ca. 30°C liegen.

### Begriffsliste:

- (1): primäres Mittel zur Temperierung des zweiten Mediums
- (1-ex): externes primäres Mittel zur Temperierung des zweiten Mediums
- (2): Mittel zur Temperierung von Umgebungsluft (extern)
- (3): Pufferspeicher für erstes Medium
- (3-1, 3-2, 3-3): In Reihe geschaltete Behälter zur Ausbildung des Pufferspeichers für erstes Medium
- (3-ex): externer Behälter zur Ausbildung des Pufferspeichers für erstes Medium
- (4): Entnahmestelle für erstes Medium,
- (5): zweiter Pufferspeicher für drittes Medium
- (5-1, 5-2, 5-3): In Reihe geschaltete Behälter zur Ausbildung des zweiten Pufferspeichers für drittes Medium
- (5-ex): externer Behälter zur Ausbildung des Pufferspeichers für drittes Medium
- (6): Durchleitungsverbindungen für zweites Medium (primäres Mittel zur Temperierung des zweiten Mediums ↔ Wärmetauscherkonstruktion des Pufferspeichers für erstes Medium)
- (7): Durchleitungsverbindungen für zweites Medium (Wärmetauscherkonstruktion des Pufferspeichers für erstes Medium ↔ Wärmetauscherkonstruktion des zweiten Pufferspeichers für drittes Medium)
- (8.1): Anschlussverbindungen für drittes Medium
- (8.2): Durchleitungsverbindungen für drittes Medium
- (9): Bypass-Durchleitungsverbindungen für das zweite Medium
- (10): Rohrverbindungen für das erste Medium zwischen den in Reihe geschaltete Behältern zur Ausbildung des Pufferspeichers für erstes Medium
- (11): Zulauf für erstes Medium
- (12.1): Kofferaufbau / Einhausung
- (12.2): Anhängerdeichsel
- (12.3): Anhängerrad

## Patentansprüche

1. Temperiersystem, mindestens umfassend
■ ein primäres Mittel (1) zur Temperierung eines zweiten Mediums,
■ einen Pufferspeicher (3) zur Bevorratung eines ersten Mediums mit einer Wärmetauscherkonstruktion, geeignet zur stofflichen Trennung und zum thermischen Austausch von zweitem und erstem Medium,
■ Durchleitungsverbindungen (6) für das zweite Medium zwischen primärem Mittel (1) zur Temperierung des zweiten Mediums und der Wärmetauscherkonstruktion des Pufferspeichers (3),
**dadurch gekennzeichnet, dass**
- das Temperiersystem weiterhin umfasst:
□ einen zweiten Pufferspeicher (5) zur Vorhaltung eines dritten Mediums mit einer Wärmetauscherkonstruktion, geeignet zur stofflichen Trennung und zum thermischen Austausch von zweitem und drittem Medium,
□ Durchleitungsverbindungen (7) für das zweite Medium zwischen der Wärmetauscherkonstruktion des Pufferspeichers (3) zur Bevorratung des ersten Mediums und der Wärmetauscherkonstruktion des zweiten Pufferspeichers (5) zur Vorhaltung des dritten Mediums,
□ Anschlussverbindungen (8.1) für die Kreislaufversorgung von mindestens einem Mittel (2) zur Temperierung von Umgebungsluft mit dem dritten Medium aus dem zweiten Pufferspeicher (5),
- das Temperiersystem als transportables Temperiersystem ausgebildet ist.

2. Temperiersystem nach Patentanspruch 1, **dadurch gekennzeichnet, dass** das primäre Mittel (1) zur Temperierung des zweiten Mediums eine Luftwärmepumpe ist.

3. Temperiersystem nach einem der Patentansprüche 1 oder 2, **dadurch gekennzeichnet, dass** das erste Medium Brauchwasser zur freien Entnahme ist.

4. Temperiersystem nach einem der Patentansprüche 1 bis 3, **dadurch gekennzeichnet, dass** das zweite Medium Glykol-haltig ist.

5. Temperiersystem nach einem der Patentansprüche 1 bis 4, **dadurch gekennzeichnet, dass** der Pufferspeicher (3) zur Bevorratung des ersten Mediums modular aufgebaut ist.

6. Temperiersystem nach Patentanspruch 5, **dadurch gekennzeichnet, dass** der modular aufgebaute Pufferspeicher (3) zur Bevorratung des ersten Mediums in Reihe geschaltete systemeigene Behälter (3-1, 3-2, 3-3) und/oder externe Behälter (3-ex) umfasst, die mittels Bypass-Durchleitungsverbindungen und geeignet angeordneter Ventile für das zweite Medium einzeln hinzu- oder wegschaltbar ausgeführt sind.

7. Temperiersystem nach einem der Patentansprüche 1 bis 6, **dadurch gekennzeichnet, dass** der zweite Pufferspeicher (5) zur Vorhaltung des dritten Mediums modular aufgebaut ist.

8. Temperiersystem nach Patentanspruch 7, **dadurch gekennzeichnet, dass** der modular aufgebaute zweite Pufferspeicher (5) zur Vorhaltung des dritten Mediums in Reihe geschaltete systemeigene Behälter (5-1, 5-2, 5-3) und/oder externe Behälter (5-ex) umfasst, die mittels Bypass-Durchleitungsverbindungen und geeignet angeordneter Ventile für das zweite Medium einzeln hinzu- oder wegschaltbar ausgeführt sind.

9. Temperiersystem nach einem der Patentansprüche 1 bis 8, **dadurch gekennzeichnet, dass** das mindestens eine Mittel (2) zur Temperierung von Umgebungsluft ein Heizkörper ist.

10. Temperiersystem nach einem der Patentansprüche 1 bis 9, **dadurch gekennzeichnet, dass** das mindestens eine Mittel (2) zur Temperierung von Umgebungsluft als Luftentfeuchter ausgebildet ist.

11. Temperiersystem nach einem der Patentansprüche 1 bis 10, **dadurch gekennzeichnet, dass** das mindestens eine Mittel (2) zur Temperierung von Umgebungsluft über Durchleitungsverbindungen (8.2), ausgesucht aus der Liste, umfassend mindestens Rohrleitungen und Schläuche, mit den Anschlussverbindungen (8.1) verbunden ist.

12. Temperiersystem nach einem der Patentansprüche 1 bis 11, **dadurch gekennzeichnet, dass** mindestens ein Vertreter aus der Liste, umfassend:
- Durchleitungsverbindungen (6) für das zweite Medium [primäres Mittel (1) zur Temperierung des zweiten Mediums ↔ Pufferspeicher (3) für erstes Medium],
- Durchleitungsverbindungen (7) für das zweite Medium [Wärmetauscherkonstruktion des Pufferspeichers (3) zur Bevorratung des ersten Mediums ↔ Wärmetauscherkonstruktion des zweiten Pufferspeichers (5) zur Vorhaltung des dritten Mediums], als Rohrleitung ausgebildet ist.

13. Temperiersystem nach einem der Patentansprüche 1 bis 12, **dadurch gekennzeichnet, dass** das Temperiersystem zur Erwärmung und zur Kühlung von Umgebungsluft geeignet ist.

14. Temperiersystem nach einem der Patentansprüche 1 bis 13, **dadurch gekennzeichnet, dass** das Temperiersystem als geschlossenes System ausgebildet ist derart, dass es zum Betrieb ausschließlich an eine externe Stromversorgung anzuschließen ist.

15. Temperiersystem nach einem der Patentansprüche 1 bis 14, **dadurch gekennzeichnet, dass** das Temperiersystem ausgebildet ist zum Aufbau auf mobile Plattformen, ausgesucht aus der Liste, mindestens umfassend:
- Anhängerfahrgestell mit festem Kofferaufbau,
- Pritschenaufbau für Lastkraftwagen,
- Wechselcontainer.
